(19) **Europäisches Patentamt**

**European Patent Office**

**Office européen des brevets**

(11) **EP 1 188 601 B1**

(12) **EUROPÄISCHE PATENTSCHRIFT**

(45) Veröffentlichungstag und Bekanntmachung des Hinweises auf die Patenterteilung:
**19.10.2005   Patentblatt 2005/42**

(51) Int Cl.⁷: **B60K 41/06**

(21) Anmeldenummer: **01120311.4**

(22) Anmeldetag: **24.08.2001**

(54) **Regelung/Begrenzung des Eingangsmomentes eines Getriebes während des Anfahrvorgangs**

Limiting control of the input torque to a transmission during start

Méthode de commande et de limitation du couple d'entrée d'une boîte de vitesses pendant le démarrage d'un véhicule

(84) Benannte Vertragsstaaten:
**AT BE CH CY DE DK ES FI FR GB GR IE IT LI LU MC NL PT SE TR**

(30) Priorität: **15.09.2000  DE 10045648**

(43) Veröffentlichungstag der Anmeldung:
**20.03.2002   Patentblatt 2002/12**

(73) Patentinhaber: **Voith Turbo GmbH & Co. KG
89522 Heidenheim (DE)**

(72) Erfinder:
• **Dietzel, Bernd
89428 Syrgenstein (DE)**

• **Körner, Tillmann, Dr.
89551 Zang (DE)**

(74) Vertreter: **Koch-Huld, Annegret Christa
Dr. Weitzel & Partner
Patentanwälte
Friedenstrasse 10
89522 Heidenheim (DE)**

(56) Entgegenhaltungen:

| | |
|---|---|
| EP-A- 0 512 726 | EP-A- 0 524 667 |
| EP-A- 0 833 042 | EP-A- 0 937 602 |
| DE-A- 3 735 246 | DE-A- 19 844 618 |
| DE-A- 19 950 664 | DE-U- 9 314 512 |
| FR-A- 2 785 961 | US-A- 5 065 319 |
| US-A- 6 064 934 | |

**Beschreibung**

Die Erfindung betrifft ein Verfahren zur Steuerung des Anfahrvorganges in einem Antriebssystem für Fahrzeuge, umfassend eine Antriebsmaschine und eine mit dieser koppelbaren Getriebebaueinheit mit wenigstens zwei Gangstufen, umfassend wenigstens einen hydrodynamischen Getriebeteil und wenigstens einen Getriebeeingang und einen Getriebeausgang.

Automatgetriebe, insbesondere Getriebebaueinheiten mit einem hydrodynamischen Getriebeteil und einem mechanischen Getriebeteil, wobei der hydrodynamische Getriebeteil vorzugsweise einen hydrodynamischen Drehzahl-/Drehmomentwandler umfasst, sind in einer Vielzahl von Ausführungen bekannt. Dabei ergeben sich bei derartigen Getrieben aufgrund der Wandlercharakteristik und der dahinterliegenden mechanischen Übersetzungen in der Regel sehr hohe Übersetzungsverhältnisse. Das Maximum ergibt sich dabei im Stillstand. Mit diesem wird auch das Eingangsdrehmoment auf den Getriebeausgang übertragen, was in der Dimensionierung der einzelnen leistungsübertragenden Elemente der Getriebebaueinheit entsprechend berücksichtigt werden muß. Die Dimensionierung der Getriebebaueinheit erfolgt dabei auf einen in der Regel unbegrenzten Momenten-Spitzenwert. Dies hat zur Folge, daß zur Gewährleistung einer sicheren Betriebsweise mitunter auch Überdimensionierungen erforderlich sind, die sich in einer erheblichen Steigerung der Kosten niederschlagen. Des weiteren sind in den Betriebszuständen, in denen übermäßig hohe Momente übertragen werden, auch die einzelnen an der Leistungsübertragung beteiligten Elemente höheren Beanspruchungen ausgesetzt, was sich in der Regel in einer unzulässig hohen Erwärmung oder anderen negativen Erscheinungen niederschlägt. Dies wirkt sich über den Gesamtbetriebszyklus betrachtet in einer Verringerung der Lebensdauer und damit Verfügbarkeit der Getriebebaueinheit aus.

Zur Vermeidung dieser Nachteile sind Verfahren zur Steuerung des Anfahrvorganges in einem Antriebssystem für Fahrzeuge vorbekannt, mittels welchen das Moment im Antriebsstrang begrenzt wird. Stellvertretend wird dabei auf die nachfolgend genannten Druckschriften verwiesen:

> EP-A-0 512 726
> DE-A-198 44 618
> US-A-5 720 358
> FR-A-2 785 961
> EP-A-833 042
> DE 37 35 246 A1
> DE 42 35 881 A1

Aus der Druckschrift EP-A-0 512 726 ist ein gattungsbildendes Verfahren zur Begrenzung eines Antriebsstrangdrehmomentes unter Verwendung einer Motorsteuerung vorbekannt. Dabei wird das abtriebsseitige Moment durch Erhöhung des Schlupfes eines hydrodynamischen Wandlers im Antriebsstrang aufgrund der Erhöhung oder Verringerung der Motordrehzahl begrenzt, welche als Steuergröße fungiert. Die Steuerungsaufgabe wird dabei von einer elektronischen Steuereinheit übernommen, die beiden Einheiten - Antriebsmaschine und Getriebe - zugeordnet ist.

Aus der Druckschrift US-A-5 720 358 ist ein Verfahren zur Steuerung des Drehmomentes in einem Antriebsstrang vorbekannt, wobei über die Drehzahl der Antriebsmaschine das Drehmoment im Antriebsstrang auf einen vorbestimmten Wert begrenzt wird. Dabei ist die Antriebsmaschine mit einem hydrodynamischen Wandler gekoppelt.

Eine analoge Ausführung ist ferner aus der Druckschrift DE-A-37 35 246 vorbekannt. Auch hier erfolgt die Begrenzung des Drehmoments an der Getriebeabtriebswelle in Abhängigkeit einer vorbestimmten Übersetzung in der Verbindung zwischen der Antriebsmaschine und der Getriebeabtriebswelle durch entsprechende Ansteuerung der Antriebsmaschine.

Bei allen beschriebenen Lösungen werden dabei in Abhängigkeit eines bestimmten gewünschten einzustellenden Ausgangsmomentes an der Getriebeabtriebswelle die von der Antriebsmaschine bereitgestellte Leistung bzw. das abgebbare Moment entsprechend eingesteuert oder eine dieses wenigstens mittelbar charakterisierende Größe. Dabei wird die Übersetzung in der Getriebebaueinheit mit berücksichtigt. Dies bedeutet, daß aufgrund eines maximal gewünschten Ausgangsdrehmomentes an der Getriebeabgangswelle die Drehzahl der Antriebsmaschine entsprechend gesteuert wird, wobei sich aufgrund der Verhältnisse im Antriebsystem auch andere Gegebenheiten einstellen können, die auch zu einer Überschreitung des Ausgangsmomentes führen können. Damit ist eine vollständige und sichere Vermeidung der Belastung einer Getriebebaueinheit nicht gewährleistet.

Der Erfindung lag daher die Aufgabe zugrunde, ein Verfahren zur Steuerung des Anfahrprogrammes in einem Antriebssystem der eingangs genannten Art weiter zu entwickeln, daß die genannten Nachteile vermieden werden. Die vorrichtungsmäßige Umsetzung soll sich dabei durch einen geringen konstruktiven, fertigungstechnischen und steuerungstechnischen Aufwand auszeichnen.

Die zwei möglichen Varienten des erfindungsgemäßen Verfahrens sind durch die Merkmale der Ansprüche 1 und 2 charakterisiert. Vorteilhafte Ausgestaltungen sind in den Unteransprüchen wiedergegeben.

Das Verfahren zur Steuerung des Anfahrvorganges in einem Antriebssystem für Fahrzeuge, umfassend eine Antriebsmaschine und eine mit dieser koppelbare Getriebebaueinheit, umfassend wenigstens zwei Gangstufen und vorrichtungsmäßig wenigstens einen hydrodynamischen Getriebeteil sowie eine Getriebeeingangswelle und eine Getriebeausgangswelle, ist dadurch charakterisiert, daß das an der Getriebeeingangswelle anliegende Eingangsdrehmoment derart gesteuert wird, daß ein bestimmter vordefinierbarer Grenzwert für das Ausgangsmoment am Ausgang der Getriebebaueinheit nicht überschritten wird.

Dies bietet den Vorteil, daß während des Anfahrvorganges ein im wesentlichen waagerechter Zugkraftverlauf als Maximum erzielt wird und des weiteren eine Dimensionierung des Getriebes nur hinsichtlich der vorgegebenen Grenzwerte für das Ausgangsdrehmoment bzw. dazu proportional das Eingangsdrehmoment erfolgen muß und nicht auf einen unbegrenzten Momentenspitzenwert, so daß gegenüber einer konventionellen Auslegung der Getriebebaueinheit eine Kostenersparnis von bis zu 15 % verzeichnet werden kann. Weitere wesentliche Vorteile bestehen aufgrund des Vermeidens von Momentenspitzen und damit einer geringeren Belastung in einer höheren Lebensdauer sowie keiner Beschränkung der Anfahr- und Dauersteifigkeit.

Die Durchführung des erfindungsgemäßen Verfahrens erfolgt grundsätzlich nach einem von zwei Grundprinzipien:

1. Berechnung des zulässigen Eingangsdrehmomentes an der Eingangswelle der Getriebebaueinheit und Bildung eines Vorgabe- bzw. Vergleichswertes für ein maximal von der Antriebsmaschine abgebbares Moment, welcher mit dem sich aus dem Fahrerwunsch gebildeten Sollwert verglichen wird, wobei im Fall, daß der aus dem Fahrerwunsch für ein bestimmtes abzugebendes Moment an der Antriebsmaschine gebildete Sollwertes den Vorgabe- bzw. Vergleichswert überschreitet, das abzugebende Moment an der Antriebsmaschine über die Motorsteuerung eingesteuert wird, d.h. der Fahrerwunsch begrenzt wird.

2. Der aus einer, den Fahrerwunsch nach einem bestimmten abzugebenden Moment oder einer bestimmten abzugebenden Leistung wenigstens mittelbar charakterisierenden Größe sich ergebende Sollwert wird als Eingangsgröße für ein bestimmtes einzustellendes Eingangsmoment an der Getriebeeingangswelle gesetzt. Dabei wird ebenfalls das maximal zulässige Eingangsdrehmoment berechnet und mit dem Sollwert verglichen, wobei bei Überschreitung des Sollwertes von der Getriebesteuervorrichtung eine Sollwertvorgabe an die Steuerung der Antriebsmaschine erfolgt. Diese richtet sich dann nach dem zulässigen Eingangsmoment an der Getriebeeingangswelle und ist somit unabhängig vom eigentlichen Fahrerwunsch, d.h. der eigentliche Fahrerwunsch wird nicht durch direkte Ansteuerung der Antriebsmaschine umgesetzt, sondern die Sollwertvorgabe erfolgt über die Getriebesteuerung unter Berücksichtigung des maximal zulässigen Eingangsmomentes an der Getriebeeingangswelle an die Steuerung der Antriebsmaschine.

In beiden Fällen ist eine Unterscheidung zwischen Eingangsdrehmoment an der Eingangswelle der Getriebebaueinheit und von der Antriebsmaschine abgebbaren Moment bei Berücksichtigung der Momentenaufnahme durch Nebenverbraucher zu treffen.

Die beiden genannten Varianten der Erfindung unterscheiden sich dadurch, daß im erstgenannten Fall eine, den Fahrerwunsch nach Beschleunigung und damit Abgabe eines Momentes bzw. Erzeugung einer bestimmten Leistung an der Verbrennungskraftmaschine wenigstens mittelbar beschreibenden Größe direkt auf das Motormoment wirkt, da der Fahrerwunsch über die Motorsteuerung an die Antriebsmaschine herangetragen wird. Im zweiten Fall erfolgt die Vorgabe der Sollwerte für das einzustellende abzugebende Moment indirekt über die Getriebesteuerung, nachdem bereits innerhalb der Getriebesteuerung abgeglichen wurde, ob der Fahrerwunsch nach Beschleunigung bzw. Verzögerung oder einer bestimmten einzustellenden Geschwindigkeit das sich daraus ergebende Eingangsdrehmoment derart bestimmt, daß das zulässige Ausgangsdrehmoment über- oder unterschritten wird. Bei Unterschreitung wird dabei aus dem Fahrerwunsch eine Sollgröße für die Motorsteuerung gebildet, welche dem Fahrerwunsch im wesentlichen entspricht, während auch bei Überschreitung hier das maximal zulässige Eingangsdrehmoment bzw. das diesem zugeordnete, an der Antriebsmaschine ausgegebene Motormoment als Sollwert für die Motorsteuerung gesetzt wird.

Gemäß einer vorteilhaften Weiterentwicklung der Erfindung ist es möglich, daß ein Maximalkriterium für das Eingangsdrehmoment mit berücksichtigt wird, falls auch dieses einen vorgegebenen Wert nicht übersteigen darf.

Zur Gewährleistung eines ruhigen Übertragungsverhaltens besteht unter einem weiteren Aspekt der Erfindung auch die Möglichkeit, daß ein das zulässige Ausgangsdrehmoment überschreitender Wert unter bestimmten Umständen, z. B. im Stillstand des Fahrzeuges, zeitlich begrenzt, zugelassen wird.

Vorrichtungsmäßig umfaßt das Antriebssystem eine Getriebebaueinheit, insbesondere in Form eines Wandlerautomatgetriebes, und eine Antriebsmaschine, welche wenigstens mittelbar mit der Getriebebaueinheit gekoppelt ist. Der Getriebebaueinheit, insbesondere dem Wandlerautomatgetriebe, ist eine Steuervorrichtung zugeordnet, welche wenigstens eine Steuereinrichtung umfasst. Des weiteren ist der Antriebsmaschine eine Steuervorrichtung zugeordnet, welche ebenfalls eine Steuereinrichtung umfasst und der Ansteuerung des Leistungsstellgliedes der Antriebsmaschine dient. Dabei können sowohl die der Getriebebaueinheit als auch der Antriebsmaschine zugeordneten Steuereinrichtungen

a) in einer gemeinsamen Steuereinrichtung zusammengefasst und/oder
b) in einer übergeordneten Steuereinrichtung, beispielsweise Fahrsteuerung, integriert werden.

Die Steuereinrichtung der Getriebebaueinheit weist in beiden Fällen eine Berechnungseinheit auf, welche das maximal zulässige Eingangsdrehmoment in Abhängigkeit der momentan anliegenden Übersetzung in der Wandlergangstufe berechnet, wobei als feste vorgebbare Größe für die Berechnung der nicht zu überschreitende Grenzwert des Ausgangsdrehmomentes fungiert. Das zulässige Eingangsdrehmoment ergibt sich dabei aus der Beziehung

$$(1) \qquad M_E = M_{AGrenz}/(\mu *i)$$

mit

$M_A$ = Ausgangsdrehmoment
$M_E$ = Eingangsdrehmoment
$\mu$ = Wandlung
$i$ = gangabhängige Übersetzung im Getriebe

Die Berechnungseinheit ermittelt dabei als erstes die Drehzahlverhältnisse zwischen dem Pumpenrad und dem Turbinenrad $\mu$ nach folgender Formel:

$$(2) \qquad \upsilon = n_T/n_P$$

mit

$n_T$ = Turbinendrehzahl
$n_P$ = Pumpendrehzahl

Zu diesem Zweck weist die Steuereinrichtung wenigstens einen Eingang bei serieller Datenübertragung oder eine Vielzahl von Eingängen bei paralleler Datenübertragung auf, welchen Signale für die erfassten Drehzahlen des Pumpenrades und des Turbinenrades zugeführt werden. Zu diesem Zweck sind die Eingänge mit entsprechenden Erfassungseinrichtungen gekoppelt.

Nach Berechnung der $\upsilon$-Werte wird in einer Zuordnungseinrichtung den einzelnen $\upsilon$-Werten ein entsprechender $\mu$-Kennwert, d.h. Wandlungskennwert, zugeordnet. Die gangabhängige Übersetzung ist für eine bestimmte Gangstufe konstant. Das ermittelte zulässige Eingangsmoment $M_{E\ zulässig}$ wird dabei entsprechend der Kopplung zwischen Getriebeeingangswelle mit der Antriebsmaschine in einen Sollwert für ein von der Antriebsmaschine zu erzeugendes Moment umgewandelt, welches als Ausgangssignal der Steuereinrichtung der Getriebebaueinheit der Steuereinrichtung der Antriebsmaschine an einem Eingang zugeführt wird. Diese Größe bildet dabei den Grenzwert für das einzustellende Motormoment, und wird in der Steuervorrichtung gemäß der ersten erfindungsgemäßen Variante der Steuervorrichtung der Antriebsmaschine mit dem aus einem, den Fahrerwunsch wenigstens mittelbar charakterisierenden Größe erzeugten Signal für ein einzustellendes abzugebendes Sollmoment verglichen, wobei der Sollwert durch den Fahrerwunsch bei Unterschreitung durch den vorgegebenen Sollwert über die Getriebesteuerung unabhängig von dieser an der Antriebsmaschine umgesetzt wird, während bei Überschreitung die durch die Getriebesteuerung vorgegebene Sollgröße Vorrang besitzt.

Gemäß der zweiten Variante der Erfindung ist die Getriebesteuervorrichtung bzw. Getriebesteuereinrichtung mit der Einrichtung zur Vorgabe eines Fahrerwunsches nach Beschleunigung oder Verzögerung bzw. einer bestimmten einzustellenden Fahrgeschwindigkeit gekoppelt, wobei in der Getriebesteuerung dementsprechend ein Sollwert für das abzugebende Moment von der Antriebsmaschine gebildet wird. Dabei wird parallel der maximal zulässige Wert $M_{Ezulässig}$ für das an der Getriebeeingangswelle sich einstellende Eingangsmoment berechnet. Ist dieses aufgrund des Fahrerwunsches zu hoch, wird eine entsprechende Stellgröße zur Ansteuerung der Antriebsmaschine ausgegeben, welche im wesentlichen die Bereitstellung eines an der Antriebsmaschine abgebbaren Momentes bewirkt, welches proportional zum maximal zulässigen Moment an der Getriebeeingangswelle ist. Im anderen Fall wird die über die Getriebesteuerung vorgegebene Sollgröße für einen möglichen Fahrerwunsch nach Beschleunigung, Verzögerung oder ansonsten in irgendeiner Weise abzugebenden Momentes direkt einer Sollgröße für das einzustellende Motormoment für die Steuereinrichtung der Antriebsmaschine gebildet.

Die Kopplung zwischen den einzelnen Eingängen und Ausgängen der unterschiedlichen Steuervorrichtungen und des weiteren der Erfassungseinrichtungen sowie der Stelleinrichtungen kann über parallele Verbindungen oder aber serielle Datenübertragungsmittel erfolgen. Die konkrete Auswahl hängt dabei entsprechend den konkreten Anforderungen an den Einsatzfall ab und liegt im Ermessen des zuständigen Fachmannes.

Aufgrund der Ermittlung des aktuell zulässigen maximalen Eingangsmomentes aus den charakterisienden Daten des Leistungsübertragungsverhaltens am Drehzahl-/Drehmomentwandler, insbesondere den Drehzahlen von Pumpen- und Turbinenrad und der Getriebeübersetzung ist eine Ermittlung des Leistungsbedarfes für das Bewegen des Fahrzeuges möglich. Für die von der Antriebsmaschine bereitzustellende Leistung, welche der Summe aus Antriebsleistung zum Bewegen des Fahrzeuges und Antriebsleistung für Nebenaggregate entspricht, wird die Nebenaggregatsleistung aus der Differenz der aktuellen vom Can-Bus abgegriffenen Motorleistung, d.h. der von der Antriebsmaschine bereitgestellten Leistung und der aktuell über das Getriebe übertragenen Antriebsleistung ermittelt.

Die auf der Grundlage des bestimmten zulässigen Eingangsmomentes sich ergebende bereitzustellende Eingangsleistung an der Getriebebaueinheit und die aktuelle von den Nebenaggregaten erforderliche Leistung bestimmt die von der Antriebsmaschine bereitzustellende Leistung.

Die erfindungsgemäße Lösung wird nachfolgend anhand von Figuren erläutert. Darin ist im einzelnen folgendes dargestellt:

Fig. 1   verdeutlicht in schematisch vereinfachter Darstellung anhand eines Blockschaltbildes die erste Variante des erfindungsgemäßen Verfahrens;

Fig. 2   verdeutlicht anhand eines Blockschaltbildes die zweite Variante des erfindungsgemäßen Verfahrens;

Fig. 3   verdeutlicht anhand eines Diagrammes den Verlauf der Drehmomentaufnahme;

Fig. 4   verdeutlicht anhand eines Diagrammes den mit dem erfindungsgemäßen Verfahren sich einstellenden Zugkraftverlauf.

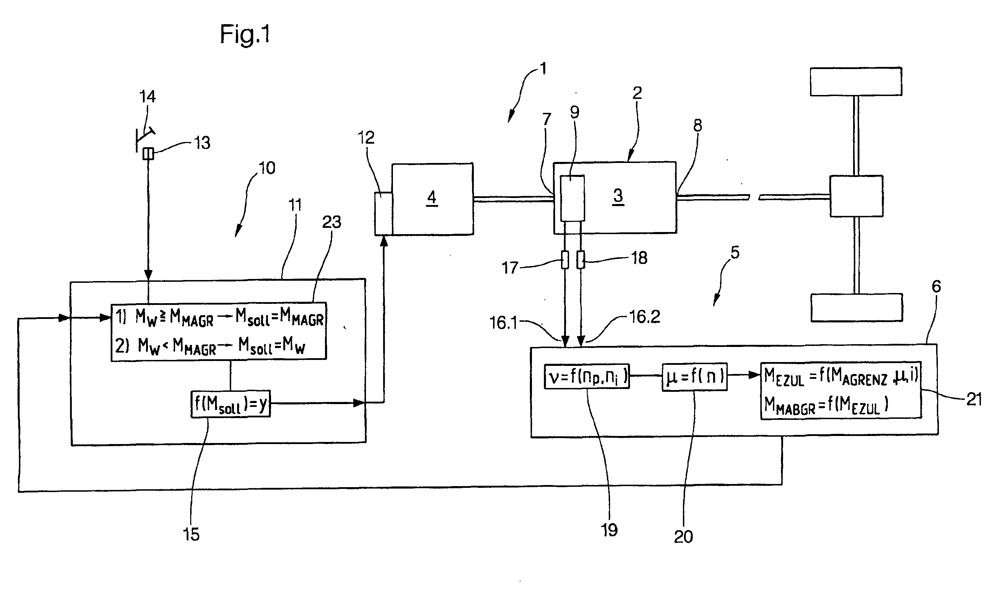

Die Figur 1 verdeutlicht in schematisch vereinfachter Darstellung anhand eines Blockschaltbildes die erste Variante des erfindungsgemäßen Verfahrens zur Steuerung des Anfahrvorganges eines Fahrzeuges mit einem Antriebsstrang 1, umfassend eine Getriebebaueinheit 2, insbesondere in Form eines Wandlerautomatgetriebes 3, und eine Antriebsmaschine 4, welche wenigstens mittelbar mit der Getriebebaueinheit 2, insbesondere dem Wandlerautomatgetriebe 3 gekoppelt ist. Der Getriebebaueinheit 2, insbesondere dem Wandlerautomatgetriebe 3 ist eine Steuervorrichtung 5 zugeordnet, welche wenigstens eine Steuereinrichtung 6 umfaßt. Die Getriebebaueinheit 2, insbesondere das Wandlerautomatgetriebe 3 weist wenigstens einen Eingang 7 und einen Ausgang 8 auf. Der Eingang 7 ist dabei wenigstens mittelbar mit der Antriebsmaschine 4 koppelbar. Der Ausgang 8 ist beim Einsatz in Fahrzeugen wenigstens mittelbar mit den anzutreibenden Rädern koppelbar. Gemäß einer ersten Ausführung des Verfahrens zur Steuerung des Anfahrvorganges mit Vorgabe eines am Ausgang 8 nicht zu überschreitenden abgegebbaren Ausgangsdrehmomentes $M_{AGRENZ}$ durch Begrenzung des am Eingang der Getriebebaueinheit anliegenden Eingangsdrehmomentes $M_E$ am Eingang 7 der Getriebebaueinheit 2 beziehungsweise des Wandlerautomatgetriebes 3 wird das Eingangsdrehmoment $M_E$ berechnet. Das zulässige Eingangsdrehmoment $M_E$ ergibt sich dabei aus der folgenden Beziehung:

$$(1) \qquad M_{Ezul} = M_{AGRENZ}/(\mu \cdot i)$$

mit

$M_A$ -        Ausgangsdrehmoment
$M_E$ -        Eingangsdrehmoment
$\mu$ -        Wandlung
i -        gangabhängige Übersetzung im Getriebe
$M_{AGRENz}$ -   nicht zu überschreitender Vorgabewert für Ausgangsdrehmoment

Den $\mu$-Werten werden dabei v-Werte zugeordnet, welche von der Steuereinrichtung 6 vorzugsweise fortlaufend berechnet werden. Dabei ergibt sich v aus der Beziehung:

$$(2) \qquad \nu = n_T/n_P$$

mit

$\nu$ -        Drehzahlverhältnis
$n_T$ -        Turbinendrehzahl
$n_P$ -        Pumpendrehzahl des hydrodynamischen Drehzahl-/Drehmomentwandlers des Wandlerautomatgetriebes 3

Der Antriebsmaschine 4 ist ebenfalls eine Steuervorrichtung 10 zugeordnet, welche eine Steuereinrichtung 11 umfaßt. Die Steuereinrichtung 10 kann dabei beispielsweise von einer am Fahrzeug ohnehin vorhandenen Fahrsteuerung gebildet werden, denkbar ist jedoch auch die separate Zuordnung der Steuervorrichtung zur Antriebsmaschine 4. Die Steuereinrichtung 11 der Antriebsmaschine 4 ist dabei mit einem Leistungsstellglied 12 der Antriebsmaschine 4 gekoppelt. Über das Leistungsstellglied 12 kann dabei das von der Antriebsmaschine 4 abgebbare Moment wenigstens mittelbar beeinflußt werden. Die Ansteuerung erfolgt bei Vorgabe eines, den Fahrerwunsch nach erhöhter Geschwindigkeit oder Beschleunigung wenigstens mittelbar charakterisierenden Größe beschreibenden Signales. Dazu ist die Steuereinrichtung 11 zur Aufnahme einer den Fahrerwunsch wenigstens mittelbar charakterisierenden Größe mit einer Einrichtung 13 zur Erfassung beziehungsweise Generierung eines Signales aus einer, den Fahrerwunsch wenigstens mittelbar beschreibenden Größe gekoppelt. Vorzugsweise erfolgt die Kopplung direkt mit einem Betätigungselement 14, welches als Fahrpedal ausgebildet ist und über welches der Fahrerwunsch nach erhöhter Geschwindigkeit oder Beschleunigung vorgebbar ist. Der Steuereinrichtung 11 der Antriebsmaschine 4 wird dabei diese Eingangsgröße, welche einen Sollwert für einen vom Fahrer gewünschte Beschleunigung und/oder Erhöhung der Geschwindigkeit bildet verarbeitet, wozu diese Steuereinrichtung eine Auswerteinrichtung 15 aufweist. Diese bildet den Sollwert für die Ansteuerung des Leistungsstellgliedes 12 der Antriebsmaschine 4 zur Änderung des abgebbaren Momentes $M_{MA}$ und/oder der Leistung. In Abhängigkeit dieses Momentes $M_{MA}$ welches dem abgebbaren Moment an der Antriebsmaschine 4 entspricht, weist das an der Getriebebaueinheit 2, insbesondere dem Wandlerautomatgetriebe 3 am Eingang 7 anliegende Eingangsmoment $M_E$ eine bestimmte Größe auf. Dieses bewirkt in Abhängigkeit der eingelegten Gangübersetzung, während des Anfahrvorganges in der Regel dem ersten Gang, aufgrund der Drehzahl-/Drehmomentwandlung ein bestimmtes Ausgangsdrehmoment $M_A$ ist am Ausgang 8 der Getriebebaueinheit 2, insbesondere dem Wandlerautomatgetriebe 3. Wird die Größe des abgebbaren Drehmomentes $M_A$ am Ausgang 8 begrenzt, das heißt, darf dieses einen zulässigen Wert $M_{AGRENZ}$ nicht übersteigen, berechnet sich dabei das sich daraus ergebene zulässige Eingangsdrehmoment $M_{Ezulässig}$ an der Getriebebaueinheit aus der oben genannten Beziehung $M_{Ezul} = M_{AGRENZ} / (\mu \cdot i)$. Die sich während des Anfahrvorganges zwischen dem Pumpenrad und dem Turbinenrad des hydrodynamischen Wandlers ergebenden Drehzahlverhältnisse werden dabei fortlaufend berechnet. Die Steuereinrichtung 6 der Getriebebaueinheit 2, insbesondere des Wandlerautomatgetriebes 3 weist dazu wenigstens einen Eingang 16 auf, hier 16.1 und 16.2, welcher wenigstens mittelbar mit den Einrichtungen zur Erfassung der Drehzahlen von Pumpenrad und Turbinenrad, welche beispielsweise mit 17 und 18 bezeichnet sind, gekoppelt ist. Die Kopplung kann dabei parallel erfolgen, das heißt die Steuereinrichtung 6 weist eine Mehrzahl von Eingängen 16.1 und 16.2 auf, die jeweils mit einer Einrichtung, beispielsweise der Einrichtung 17 zur Erfassung der Drehzahl des Pumpenrades oder der Einrichtung 18 zur Erfassung der Drehzahl des Turbinenrades koppelbar sind. Denkbar ist jedoch auch, diese Größen seriell über einen einzigen Eingang der Steuereinrichtung 6 zuzuführen. Diese Größen können dabei einem Can-Bus oder einer anderen Steuereinrichtung entnommen werden.

Aus den Drehzahlen des Pumpenrades und des Turbinenrades werden entsprechend der Beziehung $\nu = n_T / n_P$ in einer Berechnungseinheit 19 die $\nu$-Werte fortlaufend berechnet. Der in der Berechnungseinheit 19 gebildete Wert für das Drehzahlverhältnis $\nu$ wird in einer Zuordnungseinrichtung 20 entsprechenden $\mu$-Werten, welche in unterschiedlicher Art und Weise in der Steuereinrichtung 6 hinterlegt sein können, zugeordnet. Vorzugsweise erfolgt eine direkte Zuordnung über eine Tabelle oder eine entsprechende Berechnungsformel. Aus den $\mu$-Werten und einer Größe, welche wenigstens mittelbar die aktuelle in der Getriebebaueinheit 2, insbesondere dem Wandlerautomatgetriebe 3 vorliegende Übersetzung des Getriebes beschreibt, kann dann auf die Höhe des Eingangsmomentes $M_{Ezul}$ geschlossen werden. Als diese Größe wird vorzugsweise direkt die Übersetzung gewählt, welche beispielsweise anhand eines Eingangssignales an der Steuereinrichtung 6 für einen bestimmten eingelegten Gang ermittelt werden kann und in Abhängigkeit von der Getriebebaueinheit entsprechend der Zuordnung zwischen eingelegter Gangstufe und der dort vorliegenden Übersetzung gebildet werden. Als derartige Größe können beispielsweise die Betätigung der für einen entsprechenden Gang erforderlichen Betätigungselemente angesehen werden. Die Vorgabe der gangabhängigen Übersetzung kann somit auf unterschiedliche Art und Weise berücksichtigt werden. Denkbar ist die Verwendung lediglich eines Signales oder aber einer Mehrzahl von Signalen. Zur Ermittlung des theoretisch zulässigen Eingangsmomentes $M_{Ezulässig}$ wird des weiteren noch das maximale Ausgangsdrehmoment $M_{Agrenz}$ benötigt, d.h. der Wert, der auf keinen Fall überschritten werden soll. Bei diesem kann es sich entweder um eine vordefinierbare Größe handeln oder aber um eine fest abgespeicherte, welche für die bestimmte Getriebebaueinheit fest vorgegeben ist. Diese Größe wird ebenfalls in der Steuereinrichtung verarbeitet, wobei sich das zulässige Eingangsdrehmoment $M_{Ezulässig}$ aus dem maximal möglichen Ausgangsdrehmoment $M_{AGRENZ}$ und dem Produkt aus der Wandlung $\mu$ und der gangabhängigen Übersetzung $i$ ergibt. Die Bestimmung erfolgt dabei in einer weiteren Berechnungseinheit 21, wobei die einzelnen Berechnungseinheiten 20 und 19 und die Zuordnungseinrichtung 20 zu einer Baueinheit zusammengefaßt werden können beziehungsweise von einem Element, beispielsweise einer Mikroprozessoreneinheit realisiert werden können.

Das maximal zulässige Eingangsdrehmoment $M_{Ezulässig}$ wird dann der Steuervorrichtung 10, insbesondere der Steuereinrichtung 11 der Antriebsmaschine zugeführt, beispielsweise über eine Kopplung 22, wobei dieser Wert als Grenzwert für das von der Antriebsmaschine 4 abgebbare Moment $M_{MAgrenz}$ angesehen wird. Die Ansteuerung der Antriebsmaschine 4 erfolgt nunmehr derart, daß das sich aus dem Fahrerwunsch ergebende abgebbare Sollmoment $M_{MAsoll}$ mit dem berechneten zulässigen Eingangsmoment $M_E$ der Getriebebaueinheit 2 unter Berücksichtigung einet eventuell erfolgenden zwischengeschalteten Drehzahl-/Drehmomentenwandlung verglichen wird und bei Unterschreitung keine Änderungen der Ansteuerung der Antriebsmaschine 4 erfolgt, während bei Überschreitung eine Anpassung an den zu erzeugenden zulässigen Wert des Eingangsmomentes $M_{Ezul}$ am Getriebeeingang 7 erfolgt. Zu diesem Zweck weist die Steuereinrichtung 11 eine Vergleichseinrichtung 23 auf, welche einen Vergleich des theoretisch errechneten maximal zulässigen Eingangsmomentes an der Getriebebaueinheit $M_{Ezul}$ mit dem sich in Abhängigkeit vom Fahrerwunsch am Eingang 7 der Getriebebaueinheit einstellbaren Eingangsdrehmomentes $M_E$. Dabei ist zu berücksichtigen, daß diese Beziehung nur für eine direkte Kopplung zwischen dem Ausgang der Antriebsmaschine 4 und dem Eingang 7 der Getriebeeingangswelle gilt, das heißt, wenn keine dazwischen geschaltete Drehzahl-/Drehmomentwandlung erfolgt. Ansonsten ist eine zwischengeschaltete Komponente hinsichtlich der Kraftübertragung mit zu berücksichtigen.

In Abhängigkeit des Ergebnisses der Vergleichseinrichtung 23 wird entweder eine Stellgröße zur Änderung der Ansteuerung des Leistungsstellgliedes 12 der Antriebsmaschine 4 gebildet oder aber nichts unternommen.

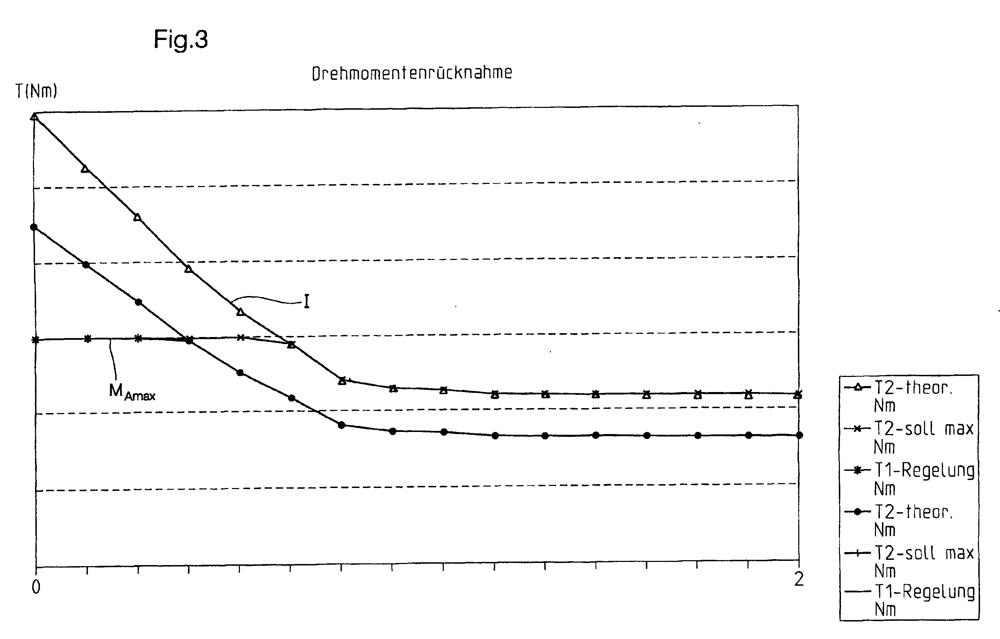

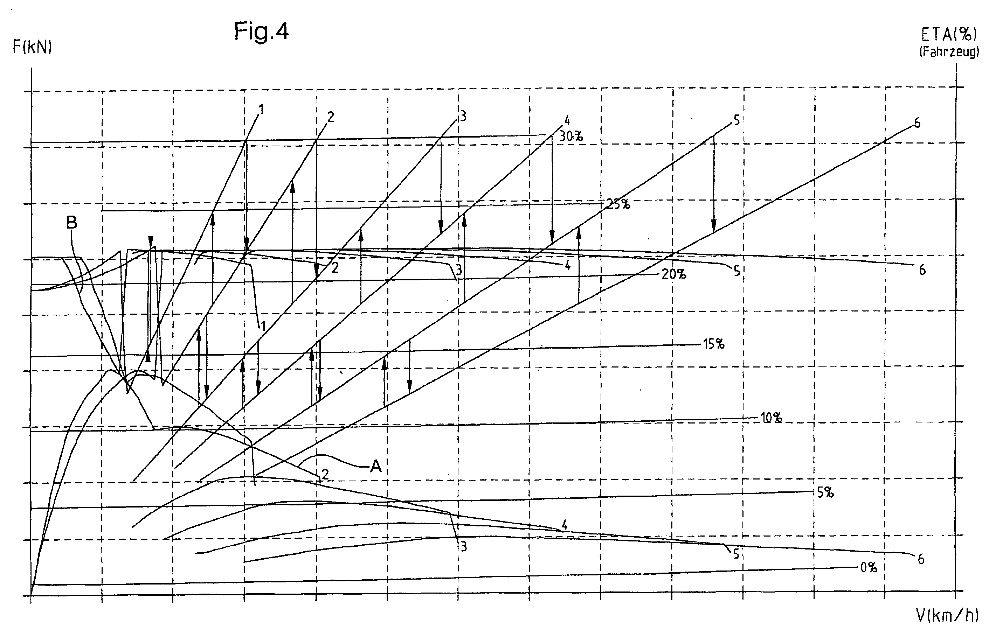

Ist die, den Fahrerwunsch wenigstens mittelbar beschreibende Größe und damit das dieser entsprechenden sich einstellenden Momentes $P_{MW}$ am Abtrieb der Antriebsmaschine 4 beziehungsweise am Eingang 7 der Getriebebaueinheit größer als das zulässige Eingangsmoment $M_{Ezulässig}$ wird lediglich das zum Unterschreiten des maximalen Ausgangsdrehmomentes $M_{AGRENZ}$ erforderliche zulässige Eingangsmoment ausgegeben. Dies bewirkt entsprechend der gewählten Gangübersetzung einen entsprechenden Momenten- und damit auch Zugkraftverlauf. Dadurch ergibt sich der in der Figur 3 wiedergegebene Verlauf der Drehmomentaufnahme. Diese Ausführung bietet dabei den Vorteil, daß die Zugkraft einen im wesentlichen waagerechten Zugkraftverlauf während des Anfahrvorganges gemäß Figur 4 aufweist. Dabei ist die Zugkraft F über die Fahrgeschwindigkeit abgetragen.

Ein weiterer wesentlicher Vorteil besteht darin, daß der v-Wert, das heißt das Drehzahlverhältnis zwischen der Drehzahl des Pumpenrades und des Turbinenrades messbar ist und intern in der Getriebesteuerung ermittelt werden kann, das heißt unabhängig von anderen Steuereinrichtungen vom Getriebe aus.

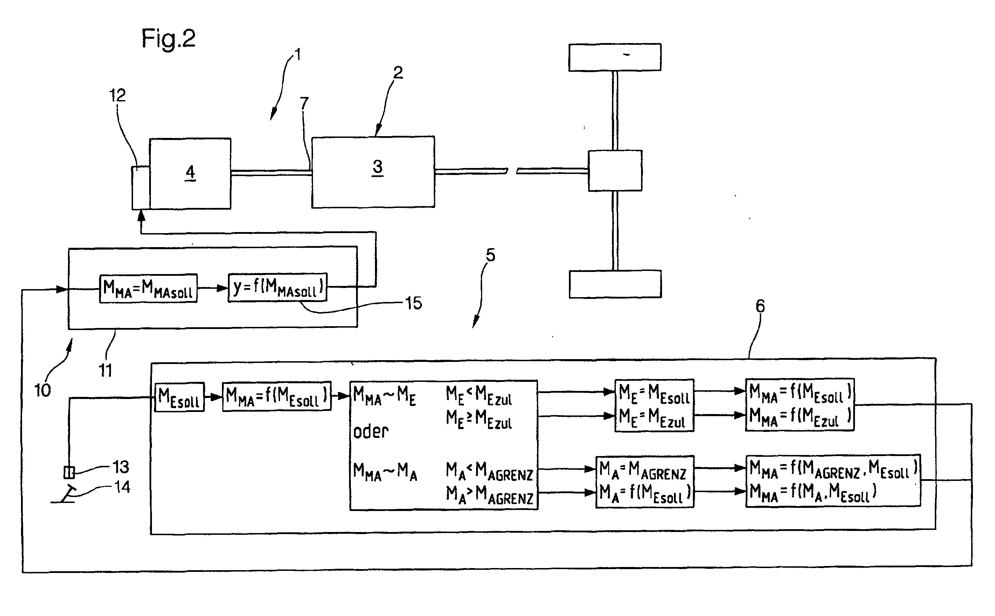

Die zweite Variante des erfindungsgemäßen Verfahrens ist in der Figur 2 wiedergegeben. Für gleiche Elemente werden die gleichen Bezugszeichen verwendet. Bei dieser wird davon ausgegangen, daß eine, dem Wunsch des Fahrers nach Beschleunigung oder Erhöhung der Geschwindigkeit wenigstens mittelbar charakterisierende Größe, welche beispielsweise aus der Stellung des Fahrpedals ermittelt werden kann, einen Sollwert für die Größe des Eingangsmomentes $M_{Esoll}$ an der Getriebeeingangswelle der Getriebebaueinheit bildet. Diese Sollgröße ist dabei entweder von der Steuereinrichtung 11 der Antriebsmaschine 4 über einen sogenannten Can-Bus verfügbar, wenn die Betätigungseinrichtung 14 zur Vorgabe eines Fahrerwunsches direkt mit der Steuervorrichtung 10, insbesondere der Steuereinrichtung 11 der Antriebsmaschine 4 hier nicht dargestellt verbunden ist oder aber an der Steuervorrichtung 5 der Getriebebaueinheit 2, wie in der Figur dargestellt. Aus der, den Fahrerwunsch wenigstens mittelbar charakterisierenden Größe wird dabei fortlaufend von der Steuereinrichtung 6 der Getriebebaueinheit 2 eine entsprechende Sollgröße für ein von der Antriebsmaschine abgebbares Moment $M_{MA}$ derart gebildet, daß der berechnete Grenzwert für das von der Getriebebaueinheit abgebbare Moment, d.h. das Ausgangsdrehmoment $M_A$ oder das an der Getriebebaueinheit am Eingang zuführbare Eingangsdrehmoment $M_{Ezulässig}$ nicht überschritten wird. Dieser Sollwert wird von der Steuereinrichtung 6 als Sollgröße der Steuervorrichtung der Antriebsmaschine 4 zugeführt, wobei dies über eine entsprechende Can-Schnittstelle erfolgen kann. Dabei wird unabhängig von der Stellung der Betätigungseinrichtung zur Vorgabe eines Fahrerwunsches über die Steuereinrichtung 6 der Getriebebaueinheit ein Sollwert für das von der Antriebsmaschine zu erzeugende abgebbare Moment $M_{MA}$ gebildet und in Verbindung mit der Wahl der Getriebeübersetzung der Arbeitspunkt im Can-Feld der Antriebsmaschine festgelegt.

Die für die Steuerung erforderlichen Drehzahlen $n_T$ und $n_P$ können unmittelbar oder mittelbar erfaßt werden. Dabei kann die Erfassung entweder durch entsprechende Einrichtungen, beispielsweise in Form von Sensoren direkt an den entsprechenden Meßstellen oder durch Erfassung der Drehzahlen an anderen, in einem bekannten Übersetzungsverhältnis stehenden Meßstellen oder durch die Auswertung der über eine Schnittstelle, zum Beispiel Can-Bus übertragenden Drehzahl erfolgen.

Bei Vorhandensein von Nebenaggregaten bestimmt sich die von der Antriebsmaschine bereitzustellende Leistung aus der Summe von Antriebsleistung zum Bewegen des Fahrzeuges und Antriebsleistung für Nebenaggregate. Die aktuelle Nebenaggregatsleistung bestimmt sich dabei beispielsweise aus der Differenz der aktuellen vom Can-Bus abgegriffenen Motorleistung, d.h. der von der Antriebsmaschine bereitgestellten Leistung und der aktuell über das Getriebe übertragenen Antriebsleistung. Diese Differenz wird ermittelt. Die auf der Grundlage des bestimmten zulässigen Eingangsmomentes sich ergebende bereitzustellende Eingangsleistung an der Getriebebaueinheit und die aktuelle von den Nebenaggregaten erforderliche Leistung wird zur Festlegung der von der Antriebsmaschine bereitzustellende Leistung herangezogen.

Die Figur 3 verdeutlicht das Prinzip der Drehmomentrücknahme in einem $M_A$ ME- Regelungsdiagramm. Die dort eingezeichnete Kennlinie I verdeutlicht dabei das theoretisch am Ausgang 8 der Getriebebaueinheit 2, insbesondere der Wandlerautomatgetriebeeinheit 3 abgebbare Moment $M_{Atheoretisch}$, während die Kennlinie II die sich einstellende Kennlinie für das maximal abgebbare Drehmoment $M_{Amax}$ am Ausgang der 8 der Getriebebaueinheit wiedergibt. Das sich daraus ergebende Moment am Eingang 7 der Getriebebaueinheit ist durch die Kennlinie III charakterisiert.

Die Figur 4 verdeutlicht einander gegenübergestellt den Zugkraftverlauf während des Anfahrvorganges mit einer erfindungsgemäßen Lösung der Steuerung des Anfahrvorganges in einem Antriebsstrang mit einer Getriebebaueinheit und einer konventionellen Steuerung des Anfahrvorganges. Die erfindungsgemäße Lösung ist dabei mit A bezeichnet, während die konventionelle Lösung mit B gekennzeichnet ist.

Bezugszeichenliste

| | |
|---|---|
| 1 | Antriebsstrang |
| 2 | Getriebebaueinheit |
| 3 | Wandlerautomatgetriebe |
| 4 | Antriebsmaschine |
| 5 | Steuervorrichtung |
| 6 | Steuereinrichtung |
| 7 | Eingang |
| 8 | Ausgang |
| 9 | Wandler |
| 10 | Steuervorrichtung der Antriebsmaschine |
| 11 | Steuereinrichtung der Antriebsmaschine |
| 12 | Leistungsstellglied |
| 13 | Einrichtung zur Erfassung einer den Fahrerwunsch wenigstens mittelbar charakterisierenden Größe |
| 14 | Betätigungseinrichtung |
| 15 | Auswerteinrichtung der Steuereinrichtung der Antriebsmaschine |
| 16 | Eingang der Steuereinrichtung der Getriebebaueinheit |
| 17 | Einrichtung zur Erfassung der Drehzahl des Pumpenrades |
| 18 | Einrichtung zur Erfassung der Drehzahl des Turbinenrades |
| 19 | Berechnungseinheit |
| 20 | Zuordnungseinrichtung |
| 21 | Berechnungseinheit |
| 22 | Kopplung |
| 23 | Vergleichseinrichtung |
| $M_A$ | Ausgangsdrehmoment |
| $M_E$ | Eingangsdrehmoment |
| $M_{MAsoll}$ | Abgebbares Sollmoment der Antriebsmaschine |
| $M_{Ezulässig}$ | Zulässiges Eingangsdrehmoment |
| $M_{MA}$ | Abgebbares Moment an der Antriebsmaschine |
| $M_{Aist}$ | Istwert des Ausgangsdrehmomentes |
| $M_{Esoll-W}$ | sich ergebender Sollwert für Eingangsdrehmoment aufgrund Fahrerwunsch |

**Patentansprüche**

1. Verfahren zur Steuerung des Anfahrvorganges in einem Antriebssystem (1) für Fahrzeuge, umfassend eine Antriebsmaschine (4) und eine mit dieser koppelbare und wenigstens zwei Gangstufen umfassende Getriebebaueinheit (2); welche wenigstens einen hydrodynamischen Getriebeteil umfaßt; bei welchem unter Berücksichtigung der Übersetzung (i) der aktuellen Gangstufe das an der Eingangswelle (7) der Getriebebaueinheit (4) anliegende Eingangsdrehmoment ($M_E$) derart gesteuert wird, daß ein bestimmter vordefinierbarer Grenzwert ($M_{AGRENZ}$) für das am Ausgang (8) der Getriebebaueinheit (4) anliegende Ausgangsmoment ($M_A$) nicht überschritten wird; **gekennzeichnet durch** die folgenden Merkmale:

   das zulässige Eingangsmoment ($M_{Ezul}$) am Eingang (7) der Getriebebaueinheit (4) wird aus dem Quotienten des vordefinierten maximalen Ausgangsdrehmomentes ($M_{AGRENZ}$) der Getriebebaueinheit (4) und dem Produkt der Wandlung μ des hydrodynamischen Bauelementes mit der Übersetzung (i) der aktuellen Gangstufe gebildet, wobei der Wert für die Wandlung μ wenigstens mittelbar, vorzugsweise direkt, **durch** die Drehzahlen ($n_P$, $n_T$) des Pumpen- und Turbinenrades charakterisiert ist; bei Vorgabe einer, den Fahrerwunsch nach Beschleunigung, Verzögerung oder einer bestimmten definierten Geschwindigkeit wenigstens mittelbar charakterisierenden Größe wird aus dieser ein Sollwert für ein an der Antriebsmaschine (4) abgebbares Moment ($M_{MAsoll}$) gebildet, wobei dieser Sollwert ($M_{MAsoll}$) proportional zum an der Getriebeeingangswelle (7) anliegenden Eingangsmoment ($M_E$) ist oder unter Berücksichtigung der an den Nebenverbrauchern erforderlichen Leistung gebildet und bei welchem aus dem berechneten zulässigen Eingangsmoment ($M_{Ezul}$) am Eingang (7) der Getriebebaueinheit (2) ein Vergleichswert für ein maximal von der Antriebsmaschine (4) abgebbares Moment ($M_{MAGRENZ}$) gebildet wird, wobei in einer der Antriebsmaschine (4) zugeordneten Steuerung (11) der Sollwert ($M_{MAsoll}$) mit dem Vergleichswert ($M_{MAGRENZ}$) verglichen wird und bei Überschreitung des von der Getriebesteuerung gebildeten Vergleichswertes ($M_{MAGRENZ}$), für ein maximal von der Antriebsmaschine (4) abgebbares Moment **durch** den aus dem Fahrerwunsch für ein bestimmtes abzugebendes Moment gebildeten Sollwert ($M_{MAsoll}$) der von der Getriebesteuerung vorgegebene Vergleichswert ($M_{MAGRENZ}$) als maximales abzugebendes Moment ($M_{MAsoll}$) der Antriebsmaschine (4) gesetzt wird.

2. Verfahren zur Steuerung des Anfahrvorganges in einem Antriebssystem (1) für Fahrzeuge, umfassend eine Antriebsmaschine (4) und eine mit dieser koppelbare und wenigstens zwei Gangstufen umfassende Getriebebaueinheit (2); welche wenigstens einen hydrodynamischen Getriebeteil umfaßt; bei welchem unter Berücksichtigung der Übersetzung (i) der aktuellen Gangstufe das an der Eingangswelle (7) der Getriebebaueinheit (4) anliegende Eingangsdrehmoment ($M_E$) derart gesteuert wird, daß ein bestimmter vordefinierbarer Grenzwert ($M_{AGRENZ}$) für das am Ausgang (8) der Getriebebaueinheit (4) anliegende Ausgangsmoment ($M_A$) nicht überschritten wird; **gekennzeichnet durch** die folgenden Merkmale:

das zulässige Eingangsmoment ($M_{Ezul}$) am Eingang (7) der Getriebebaueinheit (4) wird aus dem Quotienten des vordefinierten maximalen Ausgangsdrehmomentes ($M_{AGRENZ}$) der Getriebebaueinheit (4) und dem Produkt der Wandlung $\mu$ des hydrodynamischen Bauelementes mit der Übersetzung (i) der aktuellen Gangstufe gebildet, wobei der Wert für die Wandlung $\mu$ wenigstens mittelbar, vorzugsweise direkt, **durch** die Drehzahlen ($n_P$, $n_T$) des Pumpen- und Turbinenrades charakterisiert ist; ein aus einer, den Fahrerwunsch nach Beschleunigung, Verzögerung oder einer bestimmten definierten Geschwindigkeit wenigstens mittelbar charakterisierende Größe sich ergebender Sollwert, wird als Eingangsgröße für ein bestimmtes einzustellendes Eingangsmoment ($M_{Esoll}$) an der Getriebeeingangswelle (7) gesetzt, das maximal zulässige Eingangsdrehmoment ($M_{Ezul}$) wird berechnet und mit dem Sollwert für ein bestimmtes einzustellendes Eingangsmoment ($M_{Esoll}$) an der Getriebeeingangswelle (7) verglichen, wobei in Abhängigkeit des Vergleichs eine Sollwertvorgabe für ein von der Antriebsmaschine abzugebendes Moment ($M_{MAsoll}$) an die Motorsteuerung (10) erfolgt.

3. Verfahren nach einem der Ansprüche 1 oder 2, **dadurch gekennzeichnet, daß** neben dem zulässigen Eingangsmoment ($M_{Ezul}$) ein Maximalkriterium für dieses in der Steuerung berücksichtigt wird.

4. Verfahren nach einem der Ansprüche 1 bis 3, **dadurch gekennzeichnet, daß** für eine bestimmte Zeitdauer eine Überschreitung des maximal zulässigen Ausgangsdrehmomentes ($M_{AGRENZ}$) zugelassen ist.

**Claims**

1. A method for controlling the starting process in a drive system (1) for vehicles, comprising an engine (4) and a transmission unit (2) which can be coupled with the same and comprises two gear speeds; which comprises at least one hydrodynamic transmission part; in which by taking into account the ratio (i) of the current gear speed the input torque ($M_E$) applied to the input shaft (7) of the transmission unit (4) is controlled in such a way that a specific predeterminable threshold value ($M_{AGRENZ}$) is not exceeded for the output torque ($M_A$) applied at the output (8) of the transmission unit (4); **characterized by** the following features:

the permissible input torque ($M_{Ezul}$) at the input (7) of the transmission unit (4) is formed from the quotient of the predefined maximum output torque ($M_{AGRENZ}$) of the transmission unit (4) and the product of the conversion $\mu$ of the hydrodynamic component with the ratio (i) of the current gear speed, with the value for the conversion $\mu$ being **characterized** at least indirectly, preferably directly, by the speeds ($\eta_P$, $\eta_T$) of the pump and turbine wheel; when predetermining a variable characterizing at least indirectly the driver's desire for acceleration, deceleration or a specific defined speed, a setpoint value is formed from the same for a torque ($M_{MAsoll}$) to be supplied to the engine (4), with said setpoint value ($M_{MAsoll}$) being proportional to input torque ($M_E$) applied to the transmission input shaft (7) or is formed by considering the power required in the auxiliary consumers and in which a comparative value is formed for a maximum torque ($M_{MAGRENZ}$) to be supplied by the engine (4) from the calculated permissible input torque ($M_{Ezul}$) at the input (7) of the transmission unit (2), with the setpoint value ($M_{MAsoll}$) being compared with the comparative value ($M_{MAGRENZ}$) in a control unit (11) associated with the engine (4) and upon exceeding the comparative value ($M_{MAGRENZ}$) formed by the transmission control unit, the comparative value ($M_{MAGRENZ}$) predetermined by the transmission control unit is set as the maximum torque ($M_{MAsoll'}$) of the engine (4) to be supplied for a torque to be supplied maximally by the engine by the setpoint value ($M_{MAsoll}$) formed from the driver's wish for a certain torque to be supplied.

2. A method for controlling the starting process in a drive system (1) for vehicles, comprising an engine (4) and a transmission unit (2) which can be coupled with the same and comprises two gear speeds; which comprises at least one hydrodynamic transmission part; in which by taking into account the ratio (i) of the current gear speed the input torque ($M_E$) applied to the input shaft (7) of the transmission unit (4) is controlled in such a way that a specific predeterminable threshold value ($M_{AGRENZ}$) is not exceeded for the output torque ($M_A$) applied at the output (8) of the transmission unit (4); **characterized by** the following features:

the permissible input torque ($M_{Ezul}$) at the input (7) of the transmission unit (4) is formed from the quotient of the predefined maximum output torque ($M_{AGRENZ}$) of the transmission unit (4) and the product of the conversion μ of the hydrodynamic component with the ratio (i) of the current gear speed, with the value for the conversion μ being **characterized** at least indirectly, preferably directly, by the speeds ($\eta_P$, $\eta_T$) of the pump and turbine wheel;

a setpoint value resulting from a variable characterizing at least indirectly the driver's wish for acceleration, deceleration or a specific defined speed is set as the input variable for a certain input torque ($M_{Esoll}$) to be set at the transmission input shaft (7), the maximum permissible input torque ($M_{Ezul}$) is calculated and compared with the setpoint value for a specific input torque ($M_{Esoll}$) to be set at the transmission input shaft (7), with a setpoint setting to the engine control unit (10) being made depending on the comparison for a torque ($M_{MAsoll}$) to be supplied by the engine.

3. A method according to one of the claims 1 or 2, **characterized in that** in addition to the permissible input torque ($M_{Ezul}$) a maximum criterion for the same will be considered in the control unit.

4. A method according to one of the claims 1 to 3, **characterized in that** an exceeding of the maximum permissible output torque ($M_{AGRENZ}$) is permissible for a specific period of time.

**Revendications**

1. Procédé de commande du démarrage dans un système d'entraînement (1) pour véhicule, du type comprenant une machine d'entraînement (4) et un train d'engrenages (2) apte à être couplé à celle-ci et comprenant au moins deux rapports ;

qui comprend au moins une partie d'engrenage hydrodynamique dans laquelle le couple d'entrée ($M_E$) appliqué à l'arbre d'entrée (7) du train d'engrenages (4) est commandé en tenant compte du rapport de transmission (i) du rapport actuel de manière à ne pas dépasser une certaine valeur limite ($M_{AGRENZ}$) pouvant être fixée au préalable pour le couple de sortie ($M_A$) appliqué à la sortie (8) du train d'engrenages (4) ; **caractérisé par** les particularités suivantes :

on obtient le couple d'entrée admissible ($M_{Ezul}$) à l'entrée (7) du train d'engrenages (4) par le quotient du couple de sortie maximal prédéfini ($M_{AGRENZ}$) du train d'engrenages (4) et du produit de la conversion μ du composant hydrodynamique avec le rapport de transmission (i) du rapport actuel, la valeur pour la conversion μ étant **caractérisée** du moins indirectement, de préférence directement, par les vitesses ($n_P$, $n_T$) de la roue primaire et de la roue secondaire ;

lorsqu'une grandeur caractérisant du moins indirectement l'intention du conducteur d'accélérer, de freiner ou de rouler à une certaine vitesse définie est donnée, on forme à partir de celle-ci une valeur de consigne pour un couple ($M_{MAsoll}$) apte à être délivré par la machine d'entraînement (4), cette valeur de consigne ($M_{MAsoll}$) étant proportionnelle au couple d'entrée ($M_E$) appliqué à l'arbre d'entrée (7) de l'engrenage ou étant formée en tenant compte de l'énergie requise par les accessoires consommateurs d'énergie et

on forme une valeur de comparaison pour un couple ($M_{MAGRENZ}$) apte à être délivré par la machine d'entraînement (4) à partir du couple d'entrée admissible ($M_{Ezul}$) à l'entrée (7) du train d'engrenages (2) qui vient d'être calculé, la valeur de consigne ($M_{MAsoll}$) étant comparée à la valeur de comparaison ($M_{MAGRENZ}$) dans une commande (11) associée à la machine d'entraînement (4) et, en cas de dépassement de la valeur de comparaison ($M_{MAGRENZ}$) obtenue par la commande de l'engrenage pour un couple maximum apte à être délivré par la machine d'entraînement (4) par la valeur de consigne ($M_{MAsoll}$) formée par l'intention du conducteur d'obtenir un couple déterminé à délivrer, on fixe la valeur de comparaison ($M_{MAGRENZ}$) dictée par la commande de l'engrenage comme étant le couple maximum ($M_{MAsoll}$) à délivrer par la machine d'entraînement (4).

2. Procédé de commande du démarrage dans un système d'entraînement (1) pour véhicule, du type comprenant une machine d'entraînement (4) et un train d'engrenages (2) apte à être couplé à celle-ci et comprenant au moins deux rapports ;

qui comprend au moins une partie d'engrenage hydrodynamique dans laquelle le couple d'entrée ($M_E$) appliqué à l'arbre d'entrée (7) du train d'engrenages (4) est commandé en tenant compte du rapport de transmission (i) du rapport actuel de manière à ne pas dépasser une certaine valeur limite ($M_{MAGRENZ}$) pouvant être fixée au préalable pour le couple de sortie ($M_A$) appliqué à la sortie (8) du train d'engrenages (4) ; **caractérisé par** les particularités suivantes :

le couple d'entrée admissible ($M_{Ezul}$) à l'entrée (7) du train d'engrenages (4) est formé par le quotient du couple de sortie maximal prédéfini ($M_{MAGRENZ}$) du train d'engrenages (4) et du produit de la conversion μ du composant hydrodynamique avec le rapport de transmission (i) du rapport actuel, la valeur pour la conversion μ étant **caractérisée** du moins indirectement, de préférence directement, par les vitesses ($n_P$, $n_T$) de la roue primaire et de la roue secondaire ;

on fixe une valeur de consigne obtenue à partir d'une grandeur caractérisant du moins indirectement l'intention du conducteur d'accélérer, de freiner ou de rouler à une certaine vitesse définie sous forme de grandeur d'entrée pour un couple d'entrée ($M_{Esoll}$) déterminé qu'il y a lieu de régler sur l'arbre d'entrée (7) de l'engrenage, on calcule le couple d'entrée maximum admissible ($M_{Ezul}$) et on le compare à la valeur de consigne pour un couple d'entrée ($M_{Esoll}$) déterminé qu'il y a lieu de régler sur l'arbre d'entrée (7) de l'engrenage, une valeur de consigne pour un couple ($M_{MAsoll}$) que doit délivrer la machine d'entraînement étant dictée à la commande (10) du moteur en fonction de la comparaison.

3. Procédé selon l'une quelconque des revendications 1 ou 2, **caractérisé en ce qu'**outre le couple d'entrée admissible ($M_{Ezul}$) on tient compte d'un critère maximum pour celui-ci dans la commande.

4. Procédé selon l'une quelconque des revendications 1 à 3, **caractérisé en ce qu'**on tolère pendant un certain temps le dépassement du couple de sortie maximum admissible ($M_{AGRENZ}$).

Fig.1

Fig.2

$M_{MA} = M_{MAsoll}$  →  $y = f(M_{MAsoll})$ — 15

$M_{Esoll}$  →  $M_{MA} = f(M_{Esoll})$  →  $M_{MA} \sim M_E$

oder

$M_{MA} \sim M_A$

$M_E < M_{Ezul}$
$M_E \geq M_{Ezul}$

$M_A < M_{AGRENZ}$
$M_A > M_{AGRENZ}$

$M_E = M_{Esoll}$
$M_E = M_{Ezul}$

$M_A = M_{AGRENZ}$
$M_A = f(M_{Esoll})$

$M_{MA} = f(M_{Esoll})$
$M_{MA} = f(M_{Ezul})$

$M_{MA} = f(M_{AGRENZ}, M_{Esoll})$
$M_{MA} = f(M_A, M_{Esoll})$

EP 1 188 601 B1

Fig.3

Drehmomentenrücknahme

T(Nm)

I

M<sub>Amax</sub>

0                                                    2

EP 1 188 601 B1

T2-theor.
Nm

T2-soll max
Nm

T1-Regelung
Nm

T2-theor.
Nm

T2-soll max
Nm

T1-Regelung
Nm

Fig.4